# EUROPÄISCHE PATENTANMELDUNG

(11) **EP 1 425 968 A2**
(43) Veröffentlichungstag der Anmeldung: **09.06.2004**
(21) Anmeldenummer: 03027132.4
(22) Anmeldetag: 26.11.2003
(51) Int. Cl.: A21B 1/04, F24B 5/08

(54) **Holzbackofen**

(30) Priorität: 04.12.2002 DE 10256585
(71) Anmelder: Werz, Karl-Otto, 89522 Heidenheim (DE)
(72) Erfinder: Werz, Karl-Otto, 89522 Heidenheim (DE)
(74) Vertreter: Schmid, Wolfgang

(57) **Zusammenfassung**

Ein Holzbackofen (1) ist mit mehreren übereinander angeordneten Backkammern (2), einem Feuerbereich (3) und einer Rauchgasführung versehen, wobei die einzelnen Backkammern (2) gegenüber der Rauchgasführung mit schwenkbaren Backraumklappen (8) abschließbar sind. Rauchgaskanalklappen (8') sind derart in der Rauchgasführung angeordnet, dass bei Schließung der Rauchgaskanalklappen (8') und wenigstens eines Teiles der Backraumklappen (8) eine mäandrische Rauchgasführung vorliegt.

## Beschreibung

Die Erfindung betrifft einen Holzbackofen mit mehreren übereinander angeordneten Backkammern, einem Feuerbereich und einer Rauchgasführung, wobei die einzelnen Backkammern gegenüber der Rauchgasführung mittels schwenkbaren Backraumklappen abschließbar sind.

Aus der DE 37 20 819 A1 ist ein Backhaus bekannt, welches transportabel ausgeführt ist. Das Backhaus ist mit mehreren übereinander angeordneten und innen beheizbaren Backkammern versehen, wobei die Backkammern mit einstellbaren Klappen versehen sind. Die Backkammern weisen Böden auf, wobei im vorderen Bereich diese Böden aushebbare Platten darstellen, durch die die in einer Kammer befindliche Glut in die nächst untere Kammer fallen kann. Beim Entfernen der Asche kann die Asche in den darunter liegenden Aschekasten befördert werden. Unterhalb der Backkammern ist ein Gebläse angeordnet, von dem mehrere' Steigleitungen bis zur Höhe zweier in derselben Höhe gelegenen Kammern ausgehen.

Dieses Backhaus weist einen entscheidenden Nachteil auf, nämlich dass die Backkammerböden zur Vorbereitung zum Backen von Backgut einzeln mit Brennmaterial bestückt werden müssen, um so eine geeignete Backtemperatur zu erhalten. Aus diesem Grunde muss die Asche in den einzelnen Backkammern vor dem Backvorgang entfernt werden, was die Aufbereitungsdauer des Ofens wesentlich verlängert.

Ebenfalls sind Holzbacköfen bekannt, welche direkt beheizte Backöfen darstellen, wie aus der US 4,095,586 A bekannt, bei denen im Backraum das Feuer die Schamott-verkleidung und die Steine aufheizt, um sie später an das Backgut abzugeben: Diese Ausgestaltung eines Holzbackofens besitzt einen sehr hohen Energieverbrauch und belastet dadurch die Umwelt.

Aus der DE 40 10 203 C2 ist ein Backofen bekannt, welcher zwei in einer Ebene liegende, nebeneinander angeordnete Backkammern aufweist. Neben einer Beheizung der Backkammern ist es möglich auch einen Feuerraum zu beheizen. Bei Befeuerung der Backkammern sind Schieber derart eingestellt, dass Zugöffnungen in der Nähe von Backkammerböden freigegeben sind. Im Betriebszustand, wobei in dem Feuerraum Feuer entzündet werden kann, wird eine Rauchgasführung symmetrisch zu beiden Seiten der Backkammern geführt. Dabei sind die Schieber zu den Backkammern geschlossen, so dass Rauchgase um die Backkammern geführt werden.

Demgemäß ist es Aufgabe der Erfindung, einen Backofen der eingangs erwähnten Art zu schaffen, welcher hinsichtlich der Wärmeaufnahme durch die zu verbrennenden Brennstoffe als auch durch die Wärmeabgabe an das Backgut optimale Verhältnisse aufweist, wobei eine optimale Ausnutzung der Wärmeenergie möglich ist.

Diese Aufgabe wird erfindungsgemäß dadurch gelöst, dass Rauchgaskanalklappen derart in der Rauchgasführung angeordnet sind, dass bei Schließung der Rauchgaskanalklappen und wenigstens eines Teiles der Backraumklappen eine mäandrische Rauchgasführung vorliegt.

Jeweils seitlich an den Backkammern befinden sich Backraumklappen, wodurch die Rauchgase bei Aufheizung des Backofens durchströmen und so direkt die Backkammern beheizen können. Ebenfalls befinden sich zwischen den Backkammern und den seitlichen Wänden eine Rauchgasführung, wobei oberhalb der Backkammern Rauchgase entschwinden können. In der Rauchgasführung befinden sich Rauchgaskanalklappen, welche so in die Rauchgasführung eingebracht sind, dass bei Schließung der Rauchgaskanalklappen und wenigstens eines Teiles der Backraumklappen eine schlangenähnliche (mäandrische) Rauchgasführung vorliegt. Die Rauchgaskanalklappen regulieren die Rauchgase und nutzen somit die Heizenergie sinnvoll aus. Weiterhin kann durch das System von Klappen und Rauchgasführung die Hitze der Brennstoffglut beim Backen weitergenutzt werden, um so die Backtemperatur zu halten.

Vorteilhafte Ausgestaltungen und Weiterbildungen der Erfindung ergeben sich aus den weiteren Unteransprüchen und dem nachfolgend anhand der Zeichnung prinzipmäßig beschriebenen Ausführungsbeispiel.

Es zeigt:
- Fig. 1: eine prinzipmäßige Darstellung eines erfindungsgemäßen Holzbackofens bei Aufheizung,
- Fig. 2: eine prinzipmäßige Darstellung des in Fig. 1 aufgezeigten Holzbackofens beim Backvorgang; und
- Fig. 3: eine prinzipmäßige Darstellung einer Dampfeinrichtung.

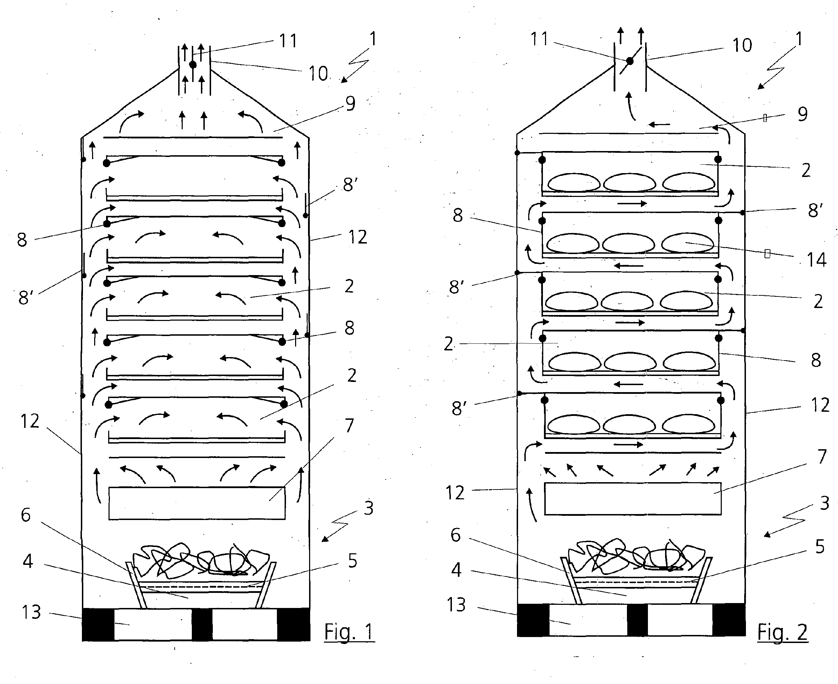

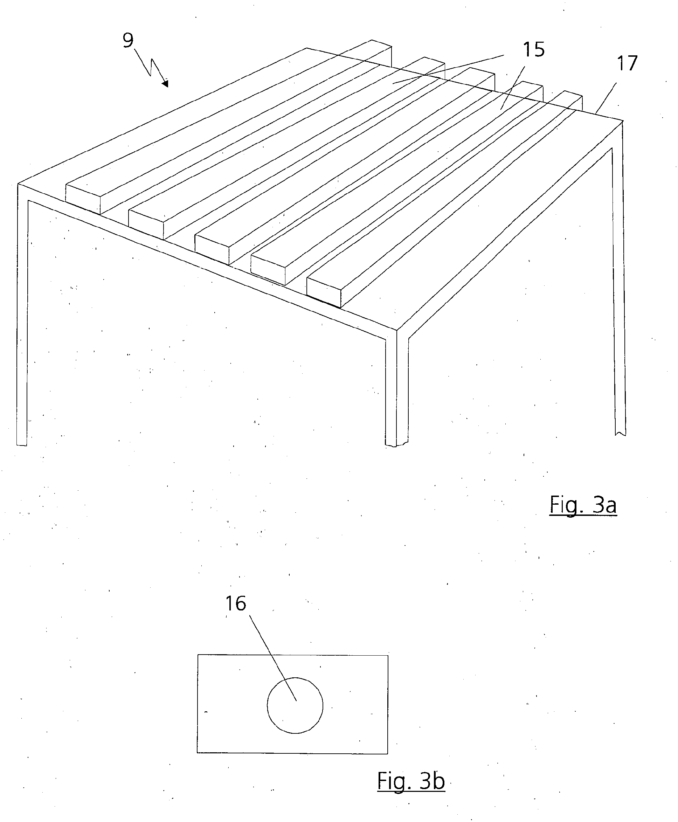

In Fig. 1 ist ein Holzbackofen 1 beim Aufheizungsvorgang prinzipmäßig dargestellt. Der Holzbackofen 1 besteht aus einer Metallkonstruktion, insbesondere aus Schwarzblech. Des weiteren befinden sich in dem Holzbackofen 1 mehrere übereinander angeordnete Backkammern 2, wobei diese über einen Feuerbereich 3 angeordnet sind. Der Feuerbereich 3 besteht aus einem Ascheraum 4, einem Feuerrost 5 und einem Feuerungswagen 6. Der Feuerungswagen 6 ist hier in vorteilhafter Weise ausziehbar ausgestaltet. Hierbei kann mit den verschiedensten Holzarten, wie Fichte, Buche, Birke, Pappel oder Bambus, der Holzbackofen 1 befeuert werden. Es wäre aber auch möglich, Briketts zur Feuerung zu benutzen. Oberhalb des Feuerbereiches 3 ist wenigstens ein Schamottstein 7 angeordnet, welche zur Wärmespeicherung dient. Rauchgase vom Feuerraum 3 können seitlich des Schamottsteines 7 zu den Backkammern 2 gelangen, welche oberhalb des Schamottsteines 7 im Holzbackofen 1 gelagert sind. An Böden der Backkammern 2 sind Steinplatten, welche in diesem Ausführungsbeispiel nicht dargestellt sind, zur Aufnahme von Backgut 14 vorgesehen. Jeweils an Seitenwänden 12 der Backkammern 2 befinden sich Backraumklappen 8, welche schwenkbar ausgeführt sind. Weiterhin befinden sich jeweils zwischen den Backraumklappen 8 der Backkammern 2 an den Seitenwänden 12 des Holzbackofens 1 Rauchgaskanalklappen 8', welche zur verbesserten Rauchgasführung dienen. Beim Aufheizen des Holzbackofen 1 können die Rauchgase vom Feuerraum 3 direkt zu den Backkammern 2 gelangen, wobei die Backraumklappen 8 zur besseren Aufheizung des Inneren der Backkammern 2 geöffnet sind. Ebenfalls sind die Rauchgaskanalklappen 8' in der Rauchgasführung geöffnet, damit das Rauchgas jeder Backkammer 2 zugänglich wird. Oberhalb der Backkammern 2 ist eine Dampfeinrichtung 9 vorgesehen, welche im nachhinein unter Fig. 3 näher beschrieben wird. Weiterhin befindet sich oberhalb der Dampfeinrichtung 9 ist eine Rauchgasabführung 10, wobei in der Rauchgasabführung 10 eine Abgasklappe 11 vorgesehen ist, welche beim Aufheizen des Holzbackofens 1 zur Rauchgasabfuhr in die Umwelt geöffnet ist.

Jeweils an den Seitenwänden 12 des Holzbackofens 1 befindet sich eine Isolierungsschicht, welche bei der schematischen Darstellung des Holzbackofens 1 in Fig. 1 nicht dargestellt ist. Der wenigstens eine Schamottstein 7, die Steinplatten auf den Böden der Backkammern 2 und die Isolierung können so beim Aufheizen des Holzbackofens 1 die Hitze, welche vom Feuerraum 3 ausgeht, sehr gut aufnehmen und über längere Zeit speichern.

In diesem Ausführungsbeispiel ist der Holzbackofen 1 auf einer Palette 13 gelagert, wobei der Holzbackofen 1 ebenso ohne Palette 13 aufgestellt werden oder mit Rollen zur leichteren Beweglichkeit versehen sein kann.

In Fig. 2 ist der in Fig. 1 gezeigte Holzbackofen 1 beim Backvorgang dargestellt. Hierbei hat der Holzbackofen 1 die gewünschte Temperatur für den Backvorgang erreicht, um damit die Backkammern 2 mit dem Backgut 14 zu beschicken. Hierbei wird der Holzbackofen 1 in diesem Ausführungsbeispiel im Feuerbereich 3 nicht nachbeheizt. Es wäre aber problemlos möglich, den Holzbackofen 1 nachzuheizen. Um die Temperatur zum Backen des Backgutes 14 zu behalten, werden die Backraumklappen 8 und die Rauchgaskanalklappen 8' geschlossen. Somit kann nun das Rauchgas'vom Feuerraum 3 entlang des wenigstens einen Schamottsteines 7 in einer mäandrischen Rauchgasführung entlang der Backkammern 2 bis zur Rauchgasabführung 10 gelangen. Hierbei wird die Abgasklappe 11 soweit geschlossen, dass nur noch ein Teil des Rauchgases entweichen, kann. Durch das Klappen und das Rauchgasführungssystem kann die Hitze der Holzglut im Feuerraum 3 beim Backen weitergenutzt werden, um so ohne Nachfeuerung die Temperatur zum Backen des Backgutes 14 zu halten. Somit können nacheinander je nach erforderlicher Temperatur Backwaren 14 gebacken werden.

Zum Schließen und Öffnen der Rauchgaskanalklappen 8' und der Backraumklappen 8 sind an einer Vorderseite des Holzbackofens 1 Hebelelemente vorgesehen. Die Hebelelemente für die Klappen 8 und 8' können nach dem herkömmlichen Stand der Technik ausgeführt sein.

Durch den Wegfall der großen Speichermasse bei herkömmlichen Holzbacköfen benötigt der Holzbackofen 1 eine sehr geringe Menge Heizmaterial und ergibt so auch eine gute Ausnutzung der Rauchgase, was sich in einer geringen Geruchsbelastung und Umweltbelastung als großer Vorteil gegenüber aus dem Stand der Technik bekannten Systemen bemerkbar macht.

Fig. 3 zeigt die Dampfeinrichtung 9, wobei die Rauchgasabführung 10 zur verbesserten Ansicht nicht mit dargestellt ist. Die Dampfeinrichtung 9 besteht aus mehreren Dampfzufuhrrohren 15, welche oberhalb der Backkammern 2 angeordnet sind. Die Dampfzufuhrrohre 15 sind parallel zu den Seitenwänden 12 des Holzbackofens 1 angeordnet. Des weiteren sind die Dampfzufuhrrohre 15 in diesem Ausführungsbeispiel als Vierkantrohre ausgebildet, wobei wie in Fig. 3b ersichtlich, im Querschnitt runde Öffnungen 16 für die Wasser- bzw. Dampfweiterleitung genutzt werden. Die Dampfzufuhrrohre 15 führen jeweils an einer Rückseite 17 des Holzbackofens 1 zu den jeweiligen Backkammern 2. Durch Einführen von Dampf in die Backkammern 2 kann das Backgut 14 besonders goldbraun und knusprig gebacken werden. Hierbei ist zu bemerken, dass jeweils nur ein Dampfzufuhrrohr 15 mit einer Backkammer 2 verbunden ist.

Beim Backen von größeren Mengen Backgut 14 wäre es möglich, mehrere derartige Holzbacköfen 1 zu benutzen, welche auch aneinandergereiht werden können. Ebenso ist der Holzbackofen 1 durch die Isolierung an allen Seiten anstellbar, was zu einer sehr günstigen Ausnutzung von Stellflächen dient.

Der erfindungsgemäße Holzbackofen 1 benötigt keinerlei elektrische Energie oder Motoren zur Ventilation, obwohl bis zu fünf Backkammern 2, wie in diesen Ausführungsbeispielen dargestellt, genutzt werden können. Des weiteren kann neben einer sehr guten Backqualität mit dem Holzbackofen 1 die Aufheizzeit ca. 50 % gegenüber herkömmlichen Systemen eingespart werden. Ebenso kann durch Nutzung der Glut und Abwärme eine Ersparnis an Heizmaterial von über 50 % ermöglicht werden.

Im Allgemeinen wird man beim Backvorgang alle Backraumklappen 8 und alle Rauchgaskanalklappen 8' schließen. In Sonderfällen können jedoch je nach Backgut auch einzelne Backkammern 2 separat auf herkömmliche Weise befeuert werden oder auch zusätzlich ohne Rauchgaskanalklappen vorgesehen werden.

## Patentansprüche

1. Holzbackofen mit mehreren übereinander angeordneten Backkammern, einem Feuerbereich und einer Rauchgasführung, wobei die einzelnen Backkammern gegenüber der Rauchgasführung mittels schwenkbaren Backraumklappen abschließbar sind,
**dadurch gekennzeichnet, dass**
Rauchgaskanalklappen (8') derart in der Rauchgasführung angeordnet sind, dass bei Schließung der Rauchgaskanalklappen (8') und wenigstens eines Teiles der Backraumklappen (8) eine mäandrische Rauchgasführung vorliegt.

2. Holzbackofen nach Anspruch 1,
**dadurch gekennzeichnet, dass**
oberhalb des Feuerbereiches (3) wenigstens ein Schamottstein (7) angeordnet ist.

3. Holzbackofen nach Anspruch 1,
**dadurch gekennzeichnet, dass**
im Feuerbereich (3) ein Ascheraum (4), ein Feuerrost (5) und ein Feuerungswagen (6) vorgesehen sind.

4. Holzbackofen nach Anspruch 3,
**dadurch gekennzeichnet, dass**
der Feuerungswagen (6) ausziehbar ausgebildet ist.

5. Holzbackofen nach Anspruch 1,
**dadurch gekennzeichnet, dass**
für Böden der Backkammern (2) Steinplatten vorgesehen sind.

6. Holzbackofen nach Anspruch 1,
**dadurch gekennzeichnet, dass**
ein unabgeschlossener Feuerraum (3) zu den Backkammern (2) vorgesehen ist, so dass Rauchgase jeweils seitlich des Feuerbereiches (3) entlang des wenigstens einen Schamottsteines (7) zu den Backkammern (2) gelangen.

7. Holzbackofen nach Anspruch 1,
**dadurch gekennzeichnet, dass**
oberhalb der Backkammern (2) eine Rauchgasabführung (10) vorgesehen ist.

8. Holzbackofen nach Anspruch 1 oder 7,
**dadurch gekennzeichnet, dass**
oberhalb der Backkammern (2) und unterhalb der Rauchgasabführung (10) eine Dampfeinrichtung (9) vorgesehen ist.

9. Holzbackofen nach Anspruch 8,
**dadurch gekennzeichnet, dass**
Dampfzufuhrrohre (15) zu den Backkammern (2) vorgesehen sind.

10. Holzbackofen nach einem der Ansprüche 1 bis 9,
**dadurch gekennzeichnet, dass**
Wände (12), Boden und Bedeckung eine zusammenhängende Metallkonstruktion bilden, an der an einer Vorderseite Hebelelemente angeordnet sind.
